# EUROPEAN PATENT APPLICATION

(11) **EP 1 892 611 A1**
(43) Date of publication of application: **27.02.2008**
(21) Application number: 06713286.0
(22) Date of filing: 08.02.2006
(51) Int. Cl.: G06F 3/048, G06F 3/14, G06F 9/00, G09G 5/00, G09G 5/36

(54) **DISPLAY DEVICE**

(30) Priority: 27.05.2005 JP 2005155974
(71) Applicant: Sharp Kabushiki Kaisha, Osaka-shi, Osaka 545-8522 (JP)
(72) Inventor: SAITOH, Kei A106, Raporu Honda, Chiba-shi, Chiba 266-0005 (JP); IWATA, Tsutomu C-202, Raporu Oyumino, Chiba-shi, Chiba 266-0031 (JP)
(74) Representative: Müller, Frithjof E.
(86) International application number: PCT/JP2006/302143
(87) International publication number: WO 2006/126310

(57) **Abstract**

An image processing portion (19) compares a preregistered fingerprint with a fingerprint sensed by a fingerprint-sensor-equipped key (32), and determines whether the fingerprints match with each other or not. When the fingerprints match with each other, a finger direction determining portion (18) determines a direction of a finger from a displacement of the fingerprint. A main controller (24) changes a direction of displayed contents of a display portion (13) according to the direction of the finger determined by the finger direction determining portion (18). Therefore, a user can change the direction of the displayed contents of the display means by a simple operation.

## Description

### Technical Field

The present invention relates a display device for a cellular phone, a personal computer, a PDA (Personal Digital Assistant) or the like, and particularly to a display device that can change a direction of displayed contents on a screen.

### Background Art

In recent years, multifunctional performances of a display device, e.g., of a cellular phone have been improved and, for example, a user of a cellular phone can watch television away from home. In general, a direction of displayed contents can be changed on such a television screen according to a user's preference. Japanese Patent Laying-Open No. 06-318058 has disclosed the invention relating to such a technique.

In an image display device disclosed in Japanese Patent Laying-Open No. 06-318058, gyroscopes are arranged in portions corresponding to X-, Y- and Z-axes of the image display device, respectively, and A/D converters convert analog values provided from gyroscopes to digital values. A CPU processes the digital values to determine a direction and an angle of rotation of the image display device, and rotates a displayed image by an angle equal to the angle of rotation of the image display device according to information thus determined so that display is performed as if a point of view moved.

Patent Document 1: Japanese Patent Laying-Open No. 06-318058

### Disclosure of the Invention

### Problems to be Solved by the Invention

However, the image display device disclosed in Japanese Patent Laying-Open No. 06-318058 employs the gyroscopes for determining the direction and angle of the rotation of the image display device. Therefore, the gyroscopes cannot work when the screen is located horizontal.

For rotating the image, it is necessary to rotate the image display device, which takes time.

The invention has been developed for overcoming the above problem, and it is an object of the invention to provide a display device, in which a direction of displayed contents and control of functions can be easily changed without requiring pressing of a specific function button and changing of the direction of the device.

### Means for Solving the Problems

According to an aspect of the invention, a display device includes display means; sensing means for sensing a displacement of a finger; and changing means for changing a direction of displayed contents of the display means according to the displacement of the finger sensed by the sensing means.

Preferably, the sensing means senses a direction of the finger.

Preferably, the sensing means senses a moving direction of the finger.

Preferably, the sensing means includes a fingerprint sensor.

Preferably, the display device further includes operation means for operating the displayed contents of the display means, and the sensing means is arranged on the operation means.

Further preferably, the operation means is a view button for displaying a television screen.

Preferably, the sensing means senses the direction of the finger or the moving direction of the finger by sensing a form of the finger.

Preferably, the sensing means senses the direction of the finger or the moving direction of the finger by sensing a fingerprint.

Preferably, the changing means changes the direction of the displayed contents of the display means when a direction of the finger or a moving direction of the finger sensed by the sensing means forms an angle of a predetermined value or more with respect to the direction of the displayed contents of the display means.

Preferably, the changing means corrects the direction of the displayed contents of the display means according to a positional relationship between the display means and the sensing means.

Preferably, the display device further includes operation portion provided with the sensing means; first sensing means for sensing a rotation angle of the display means with respect to the operation portion; and second sensing means for sensing an open angle of the display means with respect to the operation portion. The changing means corrects the direction of the displayed contents of the display means based on the rotation angle sensed by the first sensing means and the open angle sensed by the second sensing means.

### Effects of the Invention

According to the aspect of the invention, since the changing means changes the direction of the displayed contents of the display means according to the displacement of the finger sensed by the sensing means, a user can change the direction of the displayed contents of the display means by a simple operation.

The displacement of the finger includes an angular difference between a preregistered direction of the finger and the direction of the finger sensed by the sensing means, a rotation angle of the finger when rotated while being kept in contact with the sensing means, an angular difference between the moving direction of the finger and a reference direction (e.g., an upward direction) when the finger is moved, and the like.

Since the sensing means senses the direction of the finger, the user can change the direction of the displayed contents of the display means only by pressing the finger against the sensing means.

Since the sensing means senses the moving direction of the finger, the user can change the direction of the displayed contents of the display means only by moving the finger on the sensing means.

Since the sensing means includes a fingerprint sensor, only the user who has registered the fingerprint can change the displayed contents of the display means.

Since the sensing means is arranged on the operation means, the user can change the direction of the displayed contents of the display means simultaneously with the operation of the operation means.

Since the operation means is a view button for displaying the television screen, the direction of the displayed contents of the display means can be changed simultaneously with the operation of displaying the television screen.

Since the sensing means senses the direction of the finger or the moving direction of the finger by sensing the form or shape of the finger, the direction of the finger or the moving direction of the finger can be sensed more readily than the operation utilizing the fingerprint sensing.

Since the sensing means senses the direction of the finger or the moving direction of the finger by sensing the fingerprint, the direction of the finger or the moving direction of the finger can be sensed more precisely.

Since the changing means changes the direction of the displayed contents of the display means when the direction of the finger or the moving direction of the finger sensed by the sensing means forms the angle of the predetermined value or more with respect to the direction of the displayed contents of the display means, the direction of the displayed contents of the display means can be precisely changed even when there are certain variations in direction or moving direction of the finger.

Since the changing means changes the direction of the displayed contents of the display means according to the positional relationship between the display means and the sensing means, the displayed contents can be changed to the direction desired by the user even when the display device has a swivel function.

Since the changing means corrects the direction of the displayed contents of the display means based on the rotation angle sensed by the first sensing means and the open angle sensed by the second sensing means, the displayed contents can be precisely changed to the direction desired by the user.

### Brief Description of the Drawings

Fig. 1A shows a closed state of bodies 11 and 12 of a cellular phone that is an example of a display device of a first embodiment of the invention.
Fig. 1B shows a state in which body 11 of the cellular phone is open.
Fig. 2 is a block diagram illustrating a hardware structure of the cellular phone that is an example of the display device of the first embodiment of the invention.
Fig. 3A shows a display portion 13 in a state before a direction of displayed contents is changed based on a direction of a finger sensed by a fingerprint sensor.
Fig. 3B shows display portion 13 in a state after the direction of the displayed contents is changed based on the direction of the finger sensed by the fingerprint sensor.
Fig. 4 is a flowchart for illustrating processing steps of the display device of the first embodiment of the invention.
Fig. 5 is a flowchart for illustrating more specifically the processing steps of the display device of the first embodiment of the invention.
Fig. 6A shows display portion 13 in a state before the direction of the displayed contents is changed based on a moving direction of the finger sensed by the fingerprint sensor.
Fig. 6B shows display portion 13 in a state after the direction of the displayed contents is changed based on the moving direction of the finger sensed by the fingerprint sensor.
Fig. 7 is a flowchart for illustrating processing steps of a display device of a second embodiment of the invention.
Fig. 8A illustrates sensing of an open angle and a rotation angle of body 11 of the display device.
Fig. 8B shows a state in which body 11 is rotated 180 degrees around a Y-axis.
Fig. 9A shows a state in which the direction of displayed contents of display portion 13 is changed by a user pressing a fingerprint sensor 34.
Fig. 9B shows a state in which body 11 provided with display portion 13 is rotated 180 degrees around the Y-axis to a closed position.
Fig. 9C shows a state in which the direction of the displayed contents of display portion 13 is corrected.
Fig. 10 is a flowchart for illustrating processing steps of the display device of a third embodiment of the invention.

### Description of the Reference Signs

11, 12 body, 13 display portion, 14 operation portion, 15 antenna, 16 tuner portion, 17 nonvolatile memory, 18 finger direction determining portion, 20 volatile memory, 21 display driver, 22 rotation sensing portion, 23 display device direction sensing portion, 24 main controller, 31 ordinary key, 32 fingerprint-sensor-equipped key, 33 and 34 fingerprint sensor, 41-1 and 41-2 open/close magnet, 42-1 and 42-2 open/close sensor, 43-1 and 43-2 rotation sensor, 44-1 and 44-2 rotation magnet, 45 Y-axis rotation sensor, 46 Z-axis rotation sensor

### Best Modes for Carrying Out the Invention

### (First Embodiment)

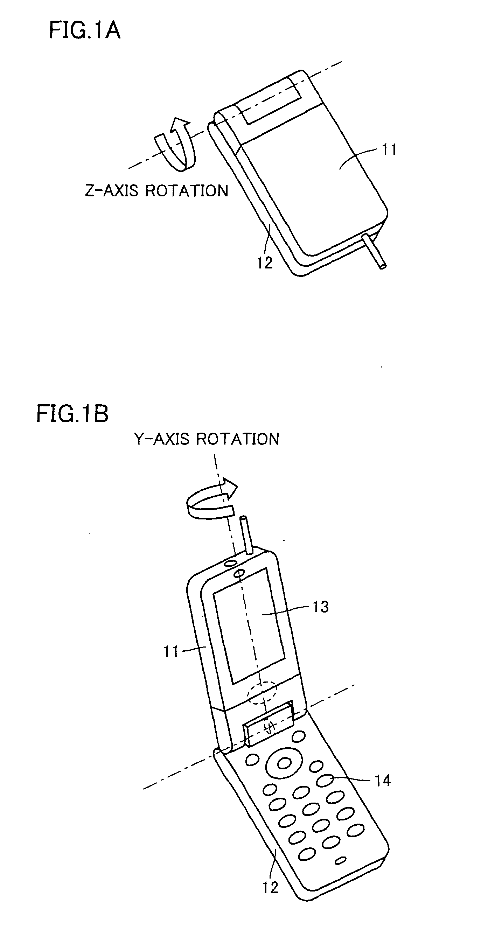

Figs. 1A and 1B show an example of an outer appearance of a cellular phone that is an example of a display device of a first embodiment of the invention. Fig. 1A shows as state in which bodies 11 and 12 of the cellular phone are closed. Body 11 is attached to body 12, and is rotatable with respect to it around a Z-axis.

Fig. 1B shows a state in which body 11 of the cellular phone is open. Body 11 is provided with a display portion 13, and body 12 is provided with an operation portion 14. Body 11 is attached to body 12 for rotation around the Y-axis, and can achieve a so-called swivel function.

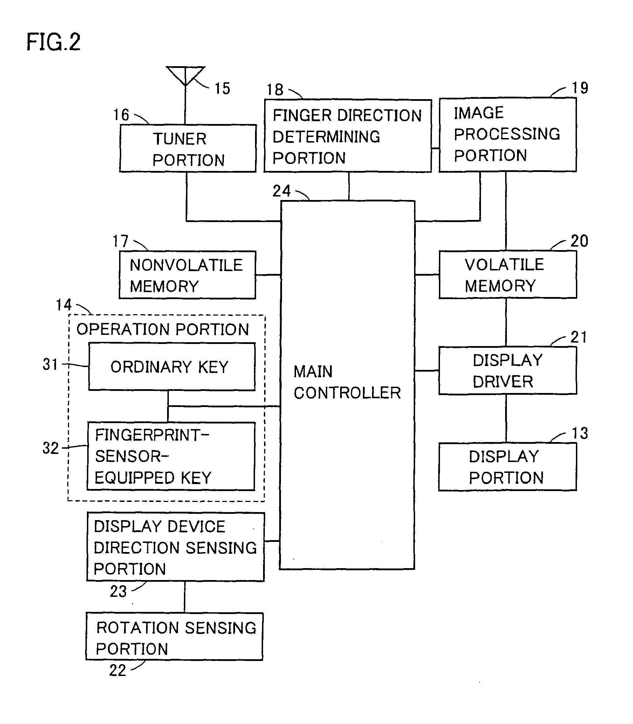

Fig. 2 is a block diagram illustrating a hardware structure of the cellular phone that is an example of the display device of the first embodiment of the invention. The cellular phone includes display portion 13, operation portion 14, an antenna 15, a tuner portion 16, a nonvolatile memory 17 storing programs and the like, a finger direction determining portion 18 that senses the operation of operation portion 14 by the user and determines a direction of a finger, an image processing portion 19 that performs image processing for determining the direction of the finger, a volatile memory 20 temporarily storing fingerprint data obtained by the fingerprint sensor and the like, a display driver 21 controlling the display of display portion 13, a rotation sensing portion 22 that senses opening/closing and rotation of body 11, a display device direction sensing portion 23 that senses the direction of the display device according to a result of the sensing by rotation sensing portion 22 and a main controller 24 performing whole control of the display device.

Operation portion 14 includes ordinary keys 31 such as numeric keys and a key 32 equipped with a fingerprint sensor. The fingerprint sensor is arranged, e.g., on a view key of a television screen. Thereby, a user can press the view key to perform simultaneously the display of the television screen and the decision of the direction of the displayed contents.

Fingerprint-sensor-equipped key 32 may have any form and structure such as a mechanical key or a touch panel key that a human can touch with a finger.

Tuner portion 16 receives waves via antenna 15, and performs demodulation to provide television pictures, sounds, data and the like to main controller 24. Also, tuner portion 16 modulates the sounds, data and the like received from main controller 24 to provide them as waves via antenna 15.

Image processing portion 19 determines whether the fingerprint sensed by fingerprint-sensor-equipped key 32 matches with a fingerprint of the user that is registered in advance, or not. When there is a match, finger direction determining portion 18 determines the direction of the finger from the direction of the fingerprint, and notifies main controller 24 of the finger direction. Nonvolatile memory 17 has stored the user's fingerprints that are registered in advance.

The registration of the fingerprints may be performed corresponding to the respective users as described above, and may also be performed to store fingerprint information of a plurality of fingers of the same person and/or to store fingerprints of different positions of the same finger.

Main operation portion 24 is formed of a CPU (Central Processing Unit), and performs the whole control of the display device by executing the programs stored in nonvolatile memory 17 or the like. When main controller 24 receives the finger direction from finger direction determining portion 18, it controls the display data of television pictures or the like to be transferred to display driver 21, thereby changes the direction of the displayed contents to match with the finger direction and displays them on display portion 13.

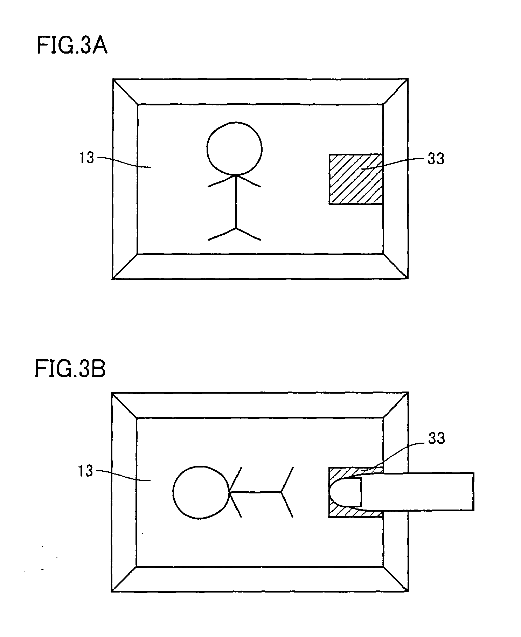

Figs. 3A and 3B illustrate a manner of changing the direction of the displayed contents of display portion 13 according to the finger direction sensed by the fingerprint sensor. For the sake of simplicity, the following described is given on the case where a fingerprint sensor 33 is located on display portion 13. It is assumed that display portion 13 in a landscape orientation is displaying a person as shown in Fig. 3A. When a finger presses fingerprint sensor 33 as shown in Fig. 3B, finger direction determining portion 18 determines the direction of the finger, and the direction of the displayed contents (i.e., direction of the person) changes to match with the direction of the finger so that display portion 13 displays the person in a portrait orientation.

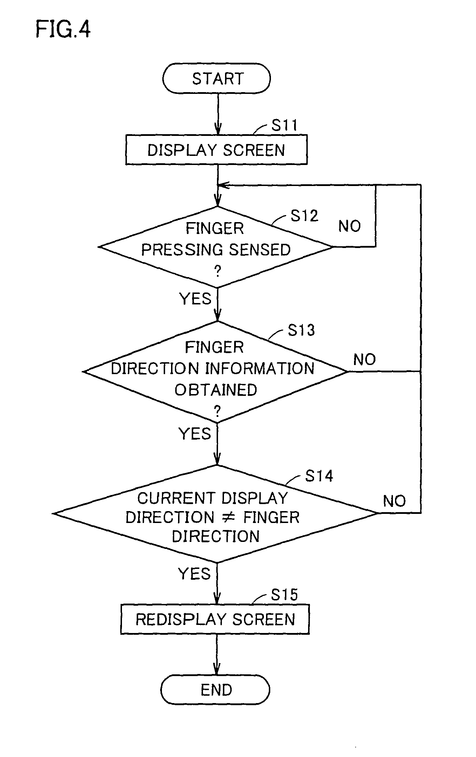

Fig. 4 is a flowchart illustrating processing steps of the display device of the first embodiment of the invention. Main controller 24 provides the display data such as television pictures to display driver 21 so that display portion 13 displays the pictures on its screen (S11).

Image processing portion 19 takes in the image data from fingerprint-sensor-equipped key 32, and thereby determines whether a finger is pressed against fingerprint-sensor-equipped key 32 or not (S12). When the finger is not pressed against it (No in S12), the processing in step S12 is repeated.

The pressing of the finger may be sensed, e.g., by a touch sensor such as a pressure sensor instead of the above manner of image recognition.

When the finger is pressed against the key (Yes in S12), main controller 24 determines whether information about the finger direction is obtained from finger direction determining portion 18 or not. When main controller 24 does not obtain the finger direction information (No in S13), i.e., when it does not authenticate the fingerprint, the process returns to step S12, and the processing in and after step S12 is repeated.

When main controller 24 obtains the finger direction information (Yes in S13), i.e., when it authenticates the fingerprint, it determines whether the current direction of displayed contents on the screen matches with the finger direction or not (S 14). When the current direction of displayed contents on the screen matches with the finger direction (No in S 14), the process returns to step S12, and the processing in and after step S12 is repeated.

When the current direction of displayed contents on the screen does not match with the finger direction (Yes in S 14), main controller 24 changes the direction of the displayed contents on the screen to match with the finger direction, and redisplays the contents (S15).

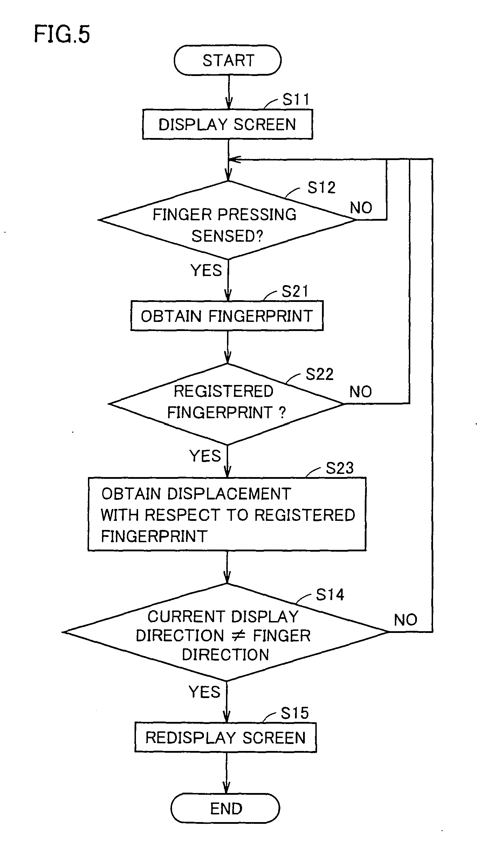

Fig. 5 is a flowchart for illustrating more specifically the processing steps of the display device of the first embodiment of the invention. In Fig. 5, the same processing steps as those in the flowchart of Fig. 4 bear the same step numbers, and detailed description thereof is not repeated.

In step S21, image processing portion 19 obtains the fingerprint by taking image data from fingerprint-sensor-equipped key 32. Image processing portion 19 compares the fingerprint that is already registered with the fingerprint sensed by fingerprint-sensor-equipped key 32, and thereby determines whether the sensed fingerprint matches with the registered fingerprint or not (S22). When it does not match with the registered fingerprint (No in S22), the process returns to step S12, and the processing in and after step S12 is repeated.

When the sensed fingerprint matches with the registered fingerprint (Yes in S22), finger direction determining portion 18 obtains a displacement of the obtained fingerprint with respect to the reference that is the direction of the registered fingerprint, and thereby determines the direction of the sensed fingerprint (S23). Thereby, the determining processing in step S 14 is performed.

In step S14, the determination whether the redisplay on the screen is to be performed or not is made depending on whether the displayed content direction of display portion 13 matches with the finger direction or not. However, when the displayed content direction of display portion 13 forms an angle of a predetermined value or less with respect to the finger direction, it may be determined that the marching occurs between the directions, and the redisplay may not be performed.

Finger direction determining portion 18 determines the finger direction by obtaining the displacement of the obtained fingerprint with respect to the registered fingerprint. Alternatively, the fingerprint may not be sensed, and such a manner may be employed that image processing portion 19 determines the form or shape of the finger by image processing, and the finger direction is determined by the form of the finger.

As described above, the display device of this embodiment determines the direction of the finger from the fingerprint sensed by fingerprint-sensor-equipped key 32, and redisplays the contents on the screen such that the displayed content direction of display portion 13 may match with the finger direction. Therefore, the user can readily change the direction of the displayed contents on the screen.

Since image processing portion 19 determines the finger direction by comparing the fingerprint sensed by fingerprint-sensor-equipped key 32 with the preregistered fingerprint, only the user who has registered the fingerprint can change the direction of the displayed contents on the screen.

By configuring fingerprint-sensor-equipped key 32 to serve also as the view key, the user can decide the displayed content direction of display portion 13 simultaneously with the operation of displaying the television screen, and this can improve the operability for the user.

When the user rotates or moves the finger while keeping the finger in contact with the fingerprint sensor, the displayed picture can be rotated or scrolled based on the direction and angle of the rotation of the finger or the moving direction.

When the device includes a plurality of fingerprint sensors, priorities may be assigned to the respective sensors, and the direction of display may be changed according to the finger direction sensed by the sensor having a high priority. Priorities may be assigned to the registered fingerprints, respectively, and the direction of display may be changed according to the finger direction sensed by the sensor that sensed the fingerprint of a high priority. The following manner may also be employed. When the user touches the sensor with two fingers, the screen view is split into two parts, and each part shows the contents in the direction depending on the direction of the corresponding finger.

### (Second Embodiment)

A hardware structure of a display device according to a second embodiment of the invention is substantially the same as that of the first embodiment shown in Fig. 2. Therefore, description of the same structures and functions is not repeated.

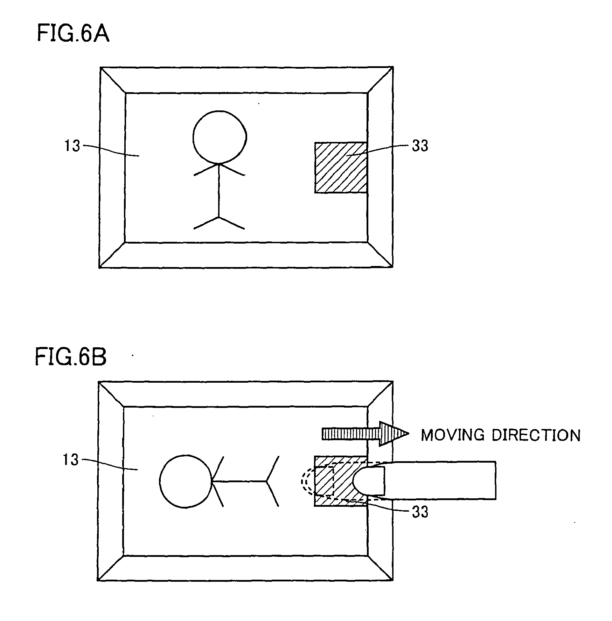

Figs. 6A and 6B illustrate changing of the direction of the displayed contents of display portion 13 according to the moving direction of finger sensed by the fingerprint sensor. It is assumed that display portion 13 in a landscape orientation is displaying a person as shown in Fig. 6A. When a finger pressed against fingerprint sensor 33 moves rightward as shown in Fig. 6B, finger direction determining portion 18 determines the moving direction of the finger, and the direction of the displayed contents (i.e., direction of the person) changes to match with the moving direction of the finger so that display portion 13 displays the person in a portrait orientation. In Fig. 6B, the downward direction of displayed contents thus changed matches with the moving direction of the finger.

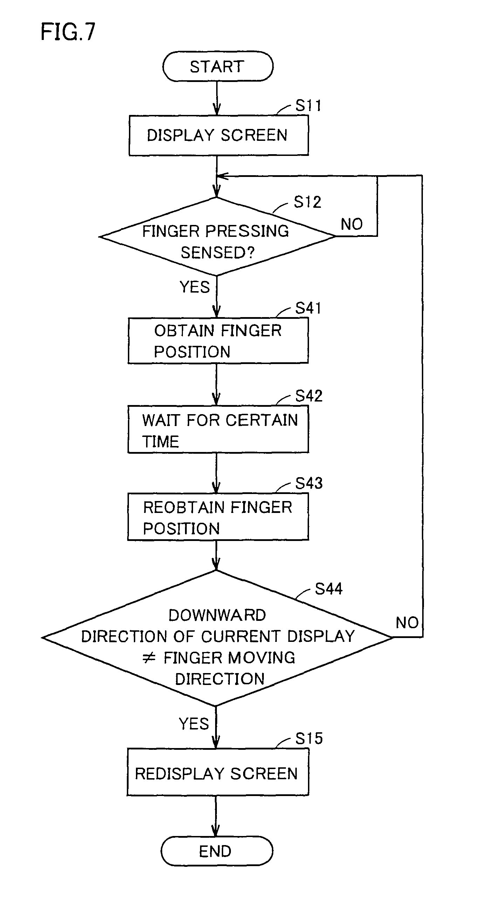

Fig. 7 is a flowchart illustrating processing steps of the display device of the second embodiment of the invention. Main controller 24 provides the display data such as television pictures to display driver 21 so that display portion 13 displays the pictures on its screen (S 11).

Image processing portion 19 takes in the image data from fingerprint-sensor-equipped key 32, and thereby determines whether the finger is pressed against fingerprint-sensor-equipped key 32 or not (S12). When the finger is not pressed against it (No in S12), the processing in step S12 is repeated.

The pressing of the finger may be sensed, e.g., by a touch sensor such as a pressure sensor instead of the above manner of image recognition.

When the finger is pressed against the key (Yes in S12), finger direction determining portion 18 obtains the position information of the finger from image processing portion 19 (S41). After a waiting state for a certain time (S42), finger direction determining portion 18 obtains the position information of the finger from image processing portion 19 again (S43).

Finger direction determining portion 18 determines the moving direction of the finger from the position information of the finger obtained in steps S41 and S43, and notifies main controller 24 of it. Main controller 24 determines whether the current downward direction of the displayed contents on the screen matches with the moving direction of the finger or not (S44). When the current downward direction of the displayed contents on the screen matches with the moving direction of the finger (No in S44), the process returns to step S12, and the processing in and after step S12 is repeated.

When the current downward direction of the displayed contents on the screen does not match with the moving direction of the finger (Yes in S44), main controller 24 changes the direction of the displayed contents to match with the finger direction, and redisplays the contents (S15).

As described above, the display device of this embodiment obtains the position of the finger from the fingerprint sensed by fingerprint-sensor-equipped key 32, and thereafter obtains the position of the finger again. Thereby, the display device determines the moving direction of the finger, and redisplays the displayed contents such that the downward direction of the displayed contents on display portion 13 matches with the moving direction of the finger. Therefore, the display device can achieve the effect substantially the same as that of the first embodiment already described.

### (Third Embodiment)

A hardware structure of a display device according to a third embodiment of the invention is substantially the same as that of the first embodiment shown in Fig. 2. Therefore, description of the same structures and functions is not repeated. The display device of this embodiment corrects the direction of the displayed contents of display portion 13 according to an open angle and a rotation angle of body 11 provided with display portion 13.

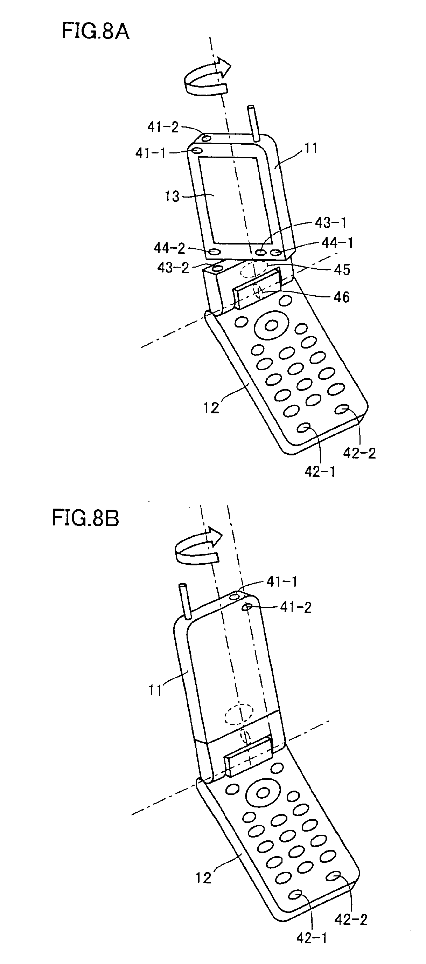

Figs. 8A and 8B illustrates a manner of sensing the open angle and the rotation angle of body 11 of the display device. As shown in Fig. 8A, the display device of this embodiment includes an open/close magnet 41-1 arranged on the display portion side of body 11, an open/close magnet 41-2 arranged on the side opposite to display portion 13 of body 11, an open/close sensor 42-1 paired with open/close magnet 41-1, an open/close sensor 42-2 paired with open/close magnet 41-2, rotation sensors 43-1 and 43-2, rotation magnets 44-1 and 44-2, a Y-axis rotation sensor 45 and a Z-axis rotation sensor 46.

When body 11 is closed with display portion 13 located inside as shown in Fig. 1A, open/close sensor 42-1 senses a magnetic force of open/close magnet 41-1. In this manner, the device can sense the opening/closing of body 11. When body 11 is rotated 180 degrees around the Y-axis as shown in Fig. 8B, open/close sensor 42-2 senses the magnetic force of open/close magnet 41-2. In this manner, the device can sense the opening/closing of body 11. Therefore, depending on the open/close sensors that actually sensed the magnetic force, the device can determine the facing direction of display portion 13 on the closed body 11.

Rotation magnets 44-1 and 44-2 have magnetic poles corresponding to N-pole and S-pole, respectively, and the device can determine the facing direction of body 11, depending on the magnetic poles sensed by respective rotation sensors 43-1 and 43-2.

Y-axis rotation sensor 45 can sense the rotation angle of body 11 around the Y-axis. Z-axis rotation sensor 46 can sense the opening angle of body 11 around the Z-axis. When Y- and Z-axis rotation sensors 45 and 46 are employed, it is not necessary to employ open/close magnets 41-1 and 41-2, open/close sensors 42-1 and 42-2, rotation sensors 43-1 and 43-2 and rotation magnets 44-1 and 44-2.

Open/close sensors 42-1 and 42-2, rotation sensors 43-1 and 43-2, and Y- and Z-axis rotation sensors 45 and 46 correspond to rotation sensing portion 22 shown in Fig. 2.

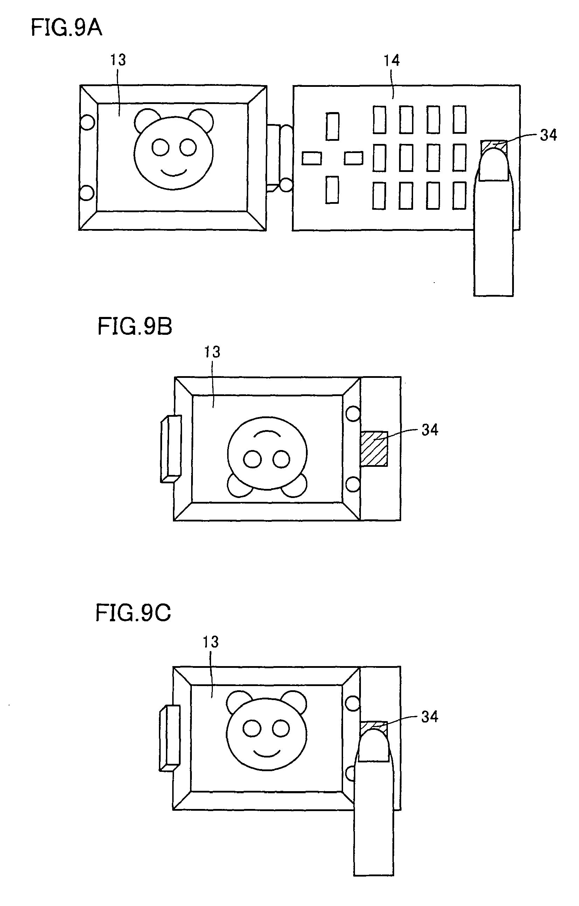

Figs. 9A - 9C illustrate correction of the direction of the displayed contents of the display device according to the third embodiment of the invention. Figs. 9A - 9C show a structure in which a fingerprint sensor 34 is independent of keys of operation portion 14. Fig. 9A shows a state in which display portion 13 and operation portion 14 are opened to a horizontal position from the position shown in Fig. 1B. When the user presses fingerprint sensor 34, the direction of the displayed contents of display portion 13 changes to the direction shown in Fig. 9A.

Fig. 9B shows a state in which body 11 provided with display portion 13 is rotated 180 degrees around the Y-axis, and body 11 is closed. In the first embodiment of the invention, when the user presses fingerprint sensor 34, the direction of the displayed contents of display portion 13 changes as shown in Fig. 9B, and the displayed contents are inverted.

Fig. 9C shows a state of the display device of this embodiment, in which the direction of the displayed contents of display portion 13 is corrected. This correction locates the displayed contents of display portion 13 in the correct direction.

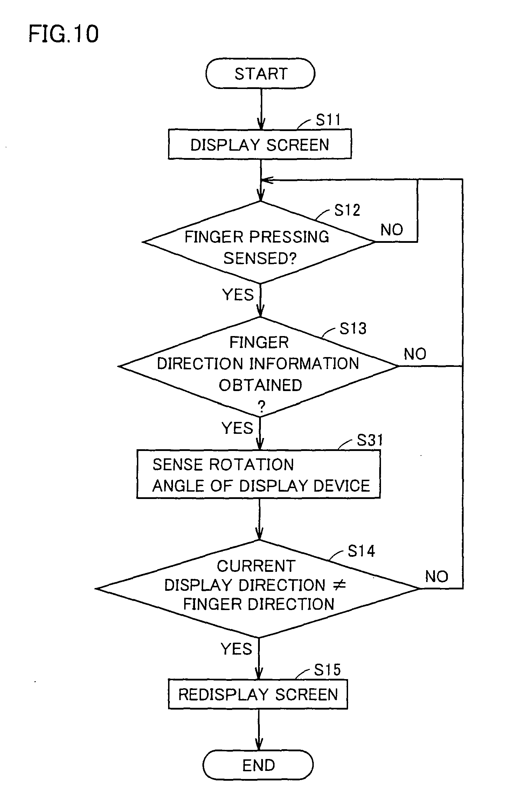

Fig. 10 is a flowchart for illustrating processing steps of the display device of the third embodiment of the invention. First, main controller 24 provides the display data such as television pictures to display driver 21 so that display portion 13 displays the pictures on its screen (S11).

Image processing portion 19 takes in the image data from fingerprint sensor 34, and thereby determines whether the finger is pressed against fingerprint sensor 34 or not (S12). When the finger is not pressed against it (No in S12), the processing in step S12 is repeated.

When the finger is pressed against the key (Yes in S12), main controller 24 determines whether information about the finger direction is obtained from finger direction determining portion 18 or not. When main controller 24 does not obtain the finger direction information (No in S13), i.e., when it does not authenticate the fingerprint, the process returns to step S12, and the processing in and after step S12 is repeated.

When main controller 24 obtains the finger direction information (Yes in S13), i.e., when it authenticates the fingerprint, display device direction sensing portion 23 obtains the signal from rotation sensing portion 22, and thereby senses the rotation angle of display portion 13 with respect to operation portion 14 (S31).

Then, main controller 24 determines whether the current direction of displayed contents on the screen matches with the direction of the finger or not (S 14). When it is determined in step S31 that display portion 13 forms the rotation angle of about 180 degrees with respect to operation portion 14, the direction of the displayed contents of display portion 13 is corrected by 180 degrees, and the determination is performed.

When the current direction of displayed contents on the screen matches with the finger direction (No in S 14), the process returns to step S 12, and the processing in and after step S12 is repeated. When the current direction of displayed contents on the screen does not match with the finger direction (Yes in S 14), main controller 24 changes the direction of the displayed contents on the screen to match with the finger direction, and redisplays the contents (S 15).

In this embodiment, it is determined whether the current direction of displayed contents on the screen matches with the finger direction or not. However, the device may be configured to determine whether the moving direction of the finger matches with the downward direction of the displayed contents of display portion 13 or not, as already described in connection with the second embodiment, and thereby the direction of the displayed contents of display portion 13 may be corrected.

According to the display device of this embodiment, as described above, the display device direction sensing portion 23 senses the rotation angle of display portion 13, and corrects the direction of the displayed contents of display portion 13 according to the rotation angle thus sensed. Therefore, the displayed contents can be changed to the direction desired by the user even in the display device or the like shown in Figs. 8A and 8B.

Although not described specifically, such a configuration may be employed that a plurality of fingers are related to fingerprints, and are also related to functions of a device, respectively, so that a certain finger(s) can be used to select a specific display fashion(s) or to instruct execution of a specific function(s).

For example, a first finger can finely control an angle, and thus can finely control a rotation angle or a movement amount of a character on a screen, and a second finger can control display, e.g., by rotating in four or eight directions and/or moving the character at constant intervals.

It may be inconvenient that the direction of the displayed contents changes whenever the user touches the sensing means. In view of this, the device may be configured such that the user can turn on/off the function of changing the direction of the displayed contents.

The following configuration may also be employed. When the finger having the registered fingerprint touches the sensing means, the display state will be kept even after the finger is separated therefrom. However, when the finger having the unregistered fingerprint changes the direction of display, the changed direction will be kept only while it is in contact with the sensing means. This is convenient when a user temporarily shows an image to a friend or the like.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A display device comprising:
display means;
sensing means for sensing a displacement of a finger; and
changing means for changing a direction of displayed contents of said display means according to the displacement of the finger sensed by said sensing means.

2. The display device according to claim 1, wherein
said sensing means senses a direction of the finger.

3. The display device according to claim 1, wherein
said sensing means senses a moving direction of the finger.

4. The display device according to claim 2 or 3, wherein
said sensing means senses the direction of the finger or the moving direction of the finger by sensing a form of the finger.

5. The display device according to claim 2 or 3, wherein
said sensing means senses the direction of the finger or the moving direction of the finger by sensing a fingerprint.

6. The display device according to any one of preceding claims 1 - 3, wherein said sensing means includes a fingerprint sensor.

7. The display device according to any one of preceding claims 1 - 3, further comprising:
operation means for operating the displayed contents of said display means, wherein
said sensing means is arranged on said operation means.

8. The display device according to claim 7, wherein
said operation means is a view button for displaying a television screen.

9. The display device according to claim 1, wherein
said changing means changes the direction of the displayed contents of said display means when a direction of the finger or a moving direction of the finger sensed by said sensing means forms an angle of a predetermined value or more with respect to the direction of the displayed contents of said display means.

10. The display device according to claim 1, wherein
said changing means corrects the direction of the displayed contents of said display means according to a positional relationship between said display means and said sensing means.

11. The display device according to claim 10, further comprising:
an operation portion provided with said sensing means;
first sensing means for sensing a rotation angle of said display means with respect to said operation portion; and
second sensing means for sensing an open angle of said display means with respect to said operation portion, wherein
said changing means corrects the direction of the displayed contents of said display means based on the rotation angle sensed by said first sensing means and the open angle sensed by said second sensing means.

## Amended claims

### Amended claims under Art. 19.1 PCT

**1.** (Amended) A display device comprising:
display means;
sensing means for sensing a displacement of a finger; and
changing means for changing a direction of displayed contents of said display means to a direction corresponding to a direction of the finger or a moving direction of the finger sensed by said sensing means.

**2.** (Deleted)

**3.** (Deleted)

**4.** (Amended) The display device according to claim 1, wherein
said sensing means senses the direction of the finger or the moving direction of the finger by sensing a form of the finger.

**5.** (Amended) The display device according to claim 1, wherein
said sensing means senses the direction of the finger or the moving direction of the finger by sensing a fingerprint.

**6.** (Amended) The display device according to claim 1, wherein
said sensing means includes a fingerprint sensor.

**7.** (Amended) The display device according to claim 1, further comprising:
operation means for operating the displayed contents of said display means, wherein
said sensing means is arranged on said operation means.

**8.** The display device according to claim 7, wherein
said operation means is a view button for displaying a television screen.

**9.** The display device according to claim 1, wherein
said changing means changes the direction of the displayed contents of the display means when a direction of the finger or a moving direction of said finger sensed by said sensing means forms an angle of a predetermined value or more with respect to the direction of the displayed contents of said display means.

**10.** The display device according to claim 1, wherein
said changing means corrects the direction of the displayed contents of said display means according to a positional relationship between said display means and said sensing means.

**11.** The display device according to claim 10, further comprising:
an operation portion provided with said sensing means;
first sensing means for sensing a rotation angle of said display means with respect to said operation portion; and
second sensing means for sensing an open angle of said display means with respect to said operation portion, wherein
said changing means corrects the direction of the displayed contents of said display means based on the rotation angle sensed by said first sensing means and the open angle sensed by said second sensing means.

**8.** The display device according to claim 7, wherein
said operation means is a view button for displaying a television screen.

**9.** The display device according to claim 1, wherein
said changing means changes the direction of the displayed contents of the display means when the direction of the finger or the moving direction of said finger sensed by said sensing means forms an angle of a predetermined value or more with respect to the direction of the displayed contents of said display means.

**10.** The display device according to claim 1, wherein
said changing means corrects the direction of the displayed contents of said display means according to a positional relationship between said display means and said sensing means.

**11.** The display device according to claim 10, further comprising:
an operation portion provided with said sensing means;
first sensing means for sensing a rotation angle of said display means with respect to said operation portion; and
second sensing means for sensing an open angle of said display means with respect to said operation portion, wherein
said changing means corrects the direction of the displayed contents of said display means based on the rotation angle sensed by said first sensing means and the open angle sensed by said second sensing means.
